# EUROPEAN PATENT SPECIFICATION

(11) **EP 0 776 912 B1**
(45) Date of publication and mention of the grant of the patent: **16.06.1999**
(21) Application number: 96118559.2
(22) Date of filing: 20.11.1996
(51) Int. Cl.: C08F 10/00, C08F 4/654

(54) **Supported catalyst for olefin polymerization**
Trägerkatalysator für die Olefinpolymerisation
Catalyseur sur support pour la polymérisation d'oléfines

(30) Priority: 01.12.1995 EP 95118945
(43) Date of publication of application: 04.06.1997
(73) Proprietor: Borealis AG, 2323 Schwechat-Mannswörth (AT)
(72) Inventor: Luciani, Luciano, Dr., 44100 Ferrara (IT); Neissl, Wolfgang, Dr., 4040 Lichtenberg (AT); Wenidoppler, Birgit, 4713 Gallspach (AT)
(74) Representative: Kunz, Ekkehard, Dr.

(56) References cited:
- EP-A- 0 101 978
- EP-A- 0 474 249
- EP-A- 0 494 084
- EP-A- 0 595 574
- EP-A- 0 767 183
- EP-A- 0 773 236

## Description

The present invention relates to a procedure for producing a solid catalyst component for polymerizing α-olefins alone or in mixture.

α-Olefins such as propylene and higher olefine monomers can be polymerized using Ziegler-Natta-catalysts based on an organometallic compound of elements of groups IA to IIIA and a compound of a transition metal belonging to groups IVA to VIA of the periodic table. Definition on Ziegler-Natta-catalysts can be found in literature, e. g. in the book: Boor Jr, Ziegler-Natta-catalysts and Polymerisation, Academic Press. New York, 1979. Highly active and highly stereospecific catalysts in the polymerisation of α-olefins, particularly propylene, are described in many patents, e. g. in British Pat. 1,387,890, where the use of trialkyl-Al (partially complexed with an electron donor compound) and the product obtained by grinding a mixture of a Mg-dihalide, an electron donor compound and a halogenated Ti-compound are provided.

More recently other patents like US 4,226,741 and US 4,673,661 show new ways for improving the performance and the preparation of the catalyst of the above mentioned patent. In US 5,310,716, the utilisation of inorganic carriers as supports (besides the use of Mg-dihalide) has been proposed .

In US 5,006,620 (among others), the use of inorganic carriers (supports) in presence of Mg-alkyls has been described. According to this patent, a catalyst-component for the polymerisation of olefins is obtained by treating a silica in suspension with an organic Mg-compound, a gaseous chlorinating agent selected from chlorine and hydrochloric acid, a derivative of phthalic acid, a C_{1 - 8} alkanol and Ti-tetrachloride.

Other proposals have been made in the art for improving the perfomance of catalytic systems. These proposals include modifications of the components of the catalytic systems by introducing further chemicals, e. g. typically Lewis bases, and using salts of a transition metal, in presence of a halide of a bivalent metal like Mg-dichloride, alone or additionally in presence of organic or inorganic carriers. In EP-A-767183 and EP-A-773236 catalysts are described, in which silylated silica is used as a support material.

In the field of catalyst research it is still strongly desirable to find new catalyst components or catalyst systems with improved performance, especially with high activity and/or high stereoregularity.

According to the present invention, it has now been found that silica can interact in two steps with Mg-halide, optionally in the presence of Ti-alkoxide (or Ti-halogenoalkoxide), and an organic Mg-alkyl compound and chlorinated hydrocarbons. It has also been found that the precursor, obtained as mentioned above and containing silica, Mg-halide or Mg-alkyl-halide and optionally a Ti-compound, can interact with Ti-tetrahalide and with a Lewis base to give a solid catalyst-component which is highly active in the polymerisation of olefins to stereoregular polymers.

The present invention accordingly provides a process for the preparation of a solid catalyst component which is active in the polymerization of olefins, comprising the steps:
a) contacting a non silylated silica support with a solution of Mg-halide or Mg-alkyl-halide or a mixture of both, optionally in the presence of Ti-alkoxyde or Ti-halogen-alkoxyde or a mixture of both,
b) contacting the catalyst-precursor obtained in (a) with Mg-alkyl or Mg-alkyl-halide or a mixture of both, optionally in presence of electron-donors (Lewis bases),
c) halogenating the catalyst-precursor obtained in (b) by contact of said activated support with halogenating agents,
d) titanating the catalyst-precursor obtained in (c) with Ti-tetrahalide in the presence of electron-donors (Lewis bases),
e) recovering the solid catalyst-component from the reaction products of step (d).

According to the present invention (concerning the preparation of an active solid component of a catalytic system, containing a silica carrier, a catalytic active part based on magnesium, halogen, titanium and Lewis bases and particularly qualified for polymerizing α-olefins alone or in mixture, especially propylene into stereoregular polymers) the procedure will preferably comprise:
1. A thermal treatment of a non activated silica to eliminate totally or partially hydroxyl groups.
2. Contacting of said silica with a solution of Mg-dihalide, optionally in the presence of Ti-alkoxyde (or Ti-halogen-alkoxyde) in an organic solvent, operating with a weight ratio between the Magnesium compound and silica of for instance 0,02 m to 10 g, and between the Titanium compound, if present, and silica of for instance 0,06 m to 10 g, at a temperature ranging from 15°C to the boiling point of the diluent, for the time necessary first to solubilize the solid salts of Mg and Ti, and then to deposit these compounds into the silica.
3. Contacting of the above composition, after removal of the diluent via distillation, with a solution of a Mg-dialkyl or Mg-halide-alkyl in an inert hydrocarbon solvent, operating with a weight ratio between Mg compound and silica of for instance 60 mM to 10 g, at a temperature from 15°C to the boiling point of the liquid phase for a period necessary to let deposit totally or partially the Magnesium compound on the silica.
   In this step, an amount of Lewis bases (electron donor) is preferably added to the hydrocarbon in a weight ratio between Lewis bases and silica for instance of 8,5 mM to 10 g.
4. Halogenation of the above composition by a treatment with halogenating agents especially selected e. g. from hydrocarbon halides, and operating in excess of this diluent at a temperature of -20°C to 120°C and for a period of 0,25 to 10 hours.
5. Treatment of the above obtained composition with an excess of Ti-tetrahalide either alone or in solution with hydrocarbon halides in presence of a Lewis base in a weight ratio between silica and Lewis base of e.g. 10g to 8,5 mM.
   The titanation of the precursor, halogenated as above described, is carried out preferably at temperatures from 80°C to 130°C for a period of 0,25 to 10 hours.
6. Recovery of the above obtained solid catalytic system after washing with hydrocarbon diluent and drying.

The first step of the preparation is dealing with silica treatments. The silica suitable as a carrier, is preferably microspheroidal and porous, with a particle size of 15 to 150 µm, with a surface area of 100 to 500 m²/g, a pore volume of 1,2 to 3,0 ml/g and an average pore diameter of 20 to 500 A. The silica has been thermically pretreated e.g. at 725°C for 8 hours.

In the second step of the procedure according to the present invention, the silica, as treated above, is suspended in a solution of Mg-compounds and optionally Ti-alkoxyde in a solvent e.g. ethylacetate.

The Mg-compounds suitable for this purpose are those defined by the formulae MgX₂ or MgXR₁, where X represents a halogen atom, preferably chlorine, and R₁ an alkyl group, linear or branched, containing from 1 to 10 carbon atoms. Specific examples are Mg-dichloride, Mg-ethyl-, or -propyl-, or -butyl-, or -hexylchloride.

The optionally used Ti-alkoxides suitable for this purpose are defined by the formula Ti(OR)ₘXₙ, where (OR) are alkoxygroups, like ethoxy, propoxy and butoxy groups and X a halogen atom, preferably chlorine. The ratio between m to n can move from 4 to 1 when n passes from 0 to 3. It is also possible to use mixtures of the above mentioned Ti-alkoxides with Ti-tetra-halide. Specific examples are Ti(OBu)₄; Ti(OBu)₃Cl; Ti(OBu)₂Cl₂; Ti(OBu)Cl₃, Ti(OProp)₄; Ti(OEt)₄.

Specific solvents for the above mentioned Mg- and Ti-salts are esters, like ethylacetate, ethylformiate; ketones, like acetone; alcohol, like ethylalcohol, butylalcohol, hexylalcohol, benzylalcohol, trichloroethylalcohol; amides, like acetamide, dimethylformamide, dimethylacetamide; organic acids, like benzoic acid, versatic acid, pelargonic acid, nonanoic acid. Preferably in this invention ethylacetate has been used.

The solution of Mg-halide, preferably Mg-dichloride, and, if present, of Ti-alkoxide, preferably Ti-tetrabutoxyde, is obtained at a temperature ranging from 15°C to the boiling point of the liquid phase, preferably from 50°C to refluxing temperature for a period of 0,5 to 4,0 hours, preferably of 2 to 3 hours. In a preferred embodiment, Mg-dihalide or Mg-alkyl-halide is dissolved in ethylacetate in the presence of Ti-tetrabutoxide or Ti-halide-alkoxide.

The silica support, treated as above mentioned is preferably added to the solution of Magnesium - and Titanium (if present) - salts, permitting the deposition into the silica support in a time from 0,15 hours to 2,0 hours, preferably 0,5 hours to 1,0 hour at a temperature of 40°C to reflux temperature, preferably around or higher than 75°C.

Under the above conditions the Magnesium- and Titanium (if present)-salts are totally or partially absorbed into the silica.

The amount of Mg-dichloride used according to the present invention is preferably of 10 to 30% w. referred to the silica, more preferably of 15 to 25 % w. and of 1 to 3 g referred to 100 ml of ethylacetate, more preferably from 1,5 to 2,5.
The amount of optionally used Ti-butoxide is of 100 to 300 % w. referred to the silica, preferably of 150 to 250 % w. and of 10 to 30 ml referred to 100 ml of ethylacetate, preferably from 15 to 25 ml.
To complete this step, the liquid phase is removed by distillation, the solid matter washed with n-heptane and then with n-pentane, and finally dried.

In the third step, the precursor, obtained as above described, is added to a solution of a Mg-dialkyl or Mg-halogen-alkyl, preferably Mg-dihexyl diluted in n-heptane at 20 % w.

The Mg-dialkyl added to the total amount of precursor is preferably of 30 to 90 mM referred to 10 g of silica, more preferably of 50 to 70 mM.
Additionally, a donor was introduced into the solution, preferably diisobutylphthalate in an amount of 1,0 to 5,0 ml.
The resulting suspension is kept at a temperature ranging from 20 to 60°C, preferably from 30°C to 50°C, for a period of about 0,5 to 1,0 hour.

In the fourth step of the procedure according to the present invention, the suspension heated as above described is put in contact and interacted with one or more halogenating agents selected from halogenated hydrocarbons, like n-butylchloride, chloroform, trichloroethane, dichloroethane, dichloromethane; or SiCl₄, SnCl₄, Cl₂, etc. Among these, a mixture of n-butylchloride and chloroform is preferred.
The ratio between chloroform and n-butyl-chloride is optional, preferred is the value of about 2 to 1 in volume.
The amount of halogenating agent can be of 1000 ml for an amount of 50 to 100 g of solid matter (precursor), preferably of 65 to 75 g.

The time necessary for halogenating the Mg-alkyl and the optionally used Ti-alkoxide varies from 1 h to 3 h, preferably from 1,5 h to 2,5 h, the temperature from 40°C to the boiling point of the diluent, preferably from 60°C to reflux temperature.
It is further preferred, to contact the catalyst precursor with, e.g., di-iso-butyl-phthalate as a donor or Lewis base before the halogenating step.
At the end of the halogenating treatment, the solid is separated from the suspension, for example by sedimentation and syphoning, filtration or centrifugation, and washed with a solvent, such as a liquid aliphatic hydrocarbon solvent, and dried.

In the fifth step of the procedure, according to the present invention, the halogenated precursor of the fourth step is submitted to titanation. Thereby it is preferred to submit the solid catalyst component obtained in step 4 to one or more treatments with Ti-tetrachloride, concentrated or diluted in aliphatic or aromatic hydrocarbons, in presence of a Lewis base.

More specifically, the procedure is carried out with an excess of Ti-tetrahalide, preferably of Ti-tetrachloride by suspending the precursor obtained as above mentioned.
The operating temperature varies from 70°C to 135°C, preferably from 90°C to 120°C for a period from 0,5 to 4,0 hours, preferably from 1 hour to 3 hours.
According to the present invention a Lewis base, like diisobutylphathalte, is added to Ti-tetrahalide in a preferred amount of 2,0 to 3,0 ml referred to 10 g of Silica used for the preparation.

Lewis bases can be, e. g., esters, ethers, amines, alkoholates, amides, preferably diisobutylphthalate.

After removing the overnatant Ti-tetrahalide, the Ti-tetrahalide treatment is repeated preferably twice, and finally, before recovering the solid catalyst component, the precursor is submitted to treatments with a liquid aliphatic hydrocarbon to dissolve and remove traces of Ti-tetrahalide, and dried.

The invention further concerns a solid catalyst component for the polymerization of olefins, obtained by the reaction steps:
a) contacting a non silylated silica support with a solution of Mg-halide or Mg-alkyl-halide or a mixture of both, optionally in the presence of Ti-alkoxyde or Ti-halogen-alkoxyde or a mixture of both,
b) contacting the catalyst-precursor obtained in (a) with Mg-alkyl or Mg-alkyl-halide or a mixture of both, optionally in the presence of electron-donors (Lewis bases),
c) halogenating the catalyst-precursor obtained in (b) by contact of said activated support with halogenating agents,
d) titanating the catalyst-precursor obtained in (c) with Ti-tetrahalide in the presence of an electron-donor compound (Lewis base),
e) recovering the solid catalyst-component from the reaction products of step (d).

According to the present invention, step (a) and step (b) can also be combined together. The solid catalyst component shows preferably this composition:

| | | |
|---|---|---|
| - Silica support | 27 - 87,5 % w. | esp. 55 - 65 % w. |
| - Catalytic active part: | Mg 2 - 10 % w | esp. 5.0 - 9.0 % w. |
| | Cl 9 - 47 % w | esp. 24 - 28 % w. |
| | Ti 1.0 - 6 % w | esp. 1.5 - 4 % w. |
| | Lewis base 0.5 - 10 % w | esp. 1.0 - 6 % w. |

wherein the Titanium is almost completely in its tetravalent form.

The present invention relates moreover to a catalyst for the stereospecific polymerisation of α-olefins, which contains: A-a solid catalyst-component as described above; B-Aluminiumtrialkyl or -haloalkyl, preferably Al-trialkyl or Al-chloroalkyl; Can electron donor, preferably selected from alkoxy-silane derivatives.

The solid catalyst component or the catalyst as described above can be advantageously used in bulk, slurry or gas phase processes for the preparation of polyolefins by homopolymerization or copolymerization with two or more monomers. The catalyst can be used also in the polymerization of ethylene as it is or omitting internal and external donors.

The present invention further relates to a process for the preparation of polyolefins by homopolymerization or copolymerization of olefins, wherein a solid catalyst component or catalyst as described above is used. The polymerisation is conducted according to conventional methods, operating in a liquid phase, either in the presence or in the absence of an inert hydrocarbon diluent, or in gas phase.

The catalyst of the invention can be used also at higher temperatures, whereby the polymerization is preferably carried out at a temperature of 20° to 150°C, more preferred between 70°C and 120°C, at atmospheric pressure or at a higher pressure, in absence or in presence of hydrogen.

The catalyst of the present invention is highly active and highly selective, permitting to achieve very low values of extractable amorphous resins in boiling n-heptane and xylene.

Many other αα-olefins can also be polymerised using this catalyst, like butene-1, 4-methyl-1-penten, hexene-1, alone or in mixture with other αα-olefins for obtaining copolymers and terpolymers, mainly of rubber type.

The use of this catalyst permits moreover to obtain controlled polymer particle size of the desired dimension on the basis of the choice of the selected silica.

Finally, this catalyst produces polypropylene resin at very high level of crystallinity due to the high selectivity and high stereoregularity.

### Example 1

10 g of microspheroidal silica, treated at 725°C for 8h, with a surface area of 280 - 355 m²/g, pore volume of 1,57 ml/g, and particles diameter of 30 µm, are introduced into a flask containing a solution of 2,0 g of α-Mg-dichloride, 10 ml of Ti-tetrabutoxide plus 3,3 ml of Ti-tetrachloride in 200 ml of ethylacetate.
The slurry is left to contact under stirring for 0,5 hours at the boiling point of the diluent.
The solid is recovered by evaporating the solvent and washed twice with 200 ml of n-heptane and twice with 200 ml of n-pentane. The hydrocarbon diluents are removed and the precursor dried.
76 mM of Mg di-hexyl diluted with n-heptane (20 % V) and 2,4 ml of di-iso-butyl-phthalate are added to the solid matter, stirring for 45 minutes at 40°C.
A solution of 100 ml of chloroform and 40 ml of n-butylchloride are introduced into the flask and reacted for 2 hours at 70°C, still under stirring, then the liquid is siphoned and the precursor washed and dried. 60 ml of Ti-tetrachloride are added at room temperature to the thus obtained solid, and the suspension is slowly heated to 90°C. When the temperature has reached the mentioned value, 2,3 ml of Diisobutylphthalate are added dropwise while increasing the temperature to 110°C under stirring. After filtering at 110°C, the same treatment with Ti-tetrachloride without diisobutylphthalate is carried out twice.
The liquid is finally syphoned at 110°C and the solid matter washed 5 times with 200 ml of n-heptane at 85 °C for 0,5 hours each time.
After twice washing treatment with n-pentane at room temperature, the catalyst is dried.
19,39 g of a violet solid component were obtained, containing 28,0 % w of Cl, 7,40 % w of Mg and 3,3 % w of Ti.
The activity and stereospecifity of this solid catalyst component were determined in runs of propylene polymerisation in liquid monomer, using as a cocatalyst Aluminiumtrialkyls treated with electron-donor compounds.
An autoclave of 5 liters equipped with a magnetic stirrer was used. The polymerisation temperature was 85°C, the amount of propylene 2000 ml and the time two hours. Hydrogen (10 000 ml) was present as molecular weight modifier.
An amount of about 52,9 mg of solid catalyst component was charged into the autoclave using as a co-catalyst an amount of Al-triethyl corresponding to an Al/Ti molar ratio (m.r.) of 100 and an electron donor (D=dicyclopentyldimethoxysilan) corresponding to an Al/D m.r. = 20.
At the conclusion of the polymerization, the remaining propylene was flashed out and the polymer was then dried in nitrogen atmosphere at about 70°C.
A yield equal to 15,95 kg PP per gram of solid component of catalyst and to 478 kg PP per gram of Titanium were obtained with the following characteristics:

| | |
|---|---|
| MFI (2.16 kg; 230°C ASTM D1238 L) | = 13,33 |
| Bulk density ......g/ml | = 0,46 |
| Isotactic index | = 98,0 |
| Xylene soluble % w | = 2,69 |

¹³C-NMR spectra were recorded on an AM 250 Bruker spectrometer operating in FT mode at 62,89 M.Hz and 39 K in inverse Gated mode of decoupling with a relaxation delay of 7 sec, finding a value of 0,97₄ in "mmmm" pentads composition in the polypropylene powder.

The polymerization test run was repeated at an Al/D m.r = 10, achieving a yield equal to 15,27 kg PP per g of solid component of catalyst and to 463 kg PP per gram of Titanium, with the following characteristics:

| | |
|---|---|
| MFI (2.16 kg : 230°C ASTM D 1238 L) | = 8,23 |
| Bulk density ...... g/ml | = 0,48 |
| Isotactic index | = 98,6 |
| Xylene soluble % | = 1,63 |

### Example 2:

10 g of microspheroidal silica, as described in example 1 and with the same characteristics, are introduced into a flask containing a solution of 1,57 g of α-Mg-dichloride, 31 ml of Mg-dihexyl and 2,7 ml of di-iso-butylphthalate in 150 ml of ethylacetate.
The slurry is left to contact under stirring for 1 hour at the boiling point of the diluent. The solid is recovered by evaporating the solvent. Then 100 ml of chloroform and 40 ml of n-butyl-chloride are intruduced into the flask and reacted for 2 hours at 70°C, still under stirring. Then the liquid is siphoned and the obtained precursor washed twice with n-heptane, twice with n-pentane and dried.
The catalyst preparation was completed after this step as described in example 1.
17,47 g of a brown solid component were obtained, containing 24,2 % w of Cl, 6,24 % of Mg and 3,17 % of Ti.
A polymerization test run was carried out at Al/D = 20 in presence of 10 000 ml of H2, as reported in example 1.
A yield equal to 15,41 kg PP per g of solid component of catalyst and equal to 486 kg PP per g of Ti was achieved, with the following characteristics:

| | |
|---|---|
| MFI (2.16kg; 230°C ASTM D 1238L) | = 2,85 |
| Bulk density g/ml | = 0,44 |
| Isotactic index | = 99,4 |
| Xylene soluble % w | = 1,06 |

## Claims

1. Procedure for the preparation of a solid catalyst component which is active in the polymerization of olefins, comprising the steps:
a) contacting a non silylated silica support with a solution of Mg-halide or Mg-alkyl-halide or a mixture of both, optionally in the presence of Ti-alkoxyde or Ti-halogen-alkoxyde or a mixture of both,
b) contacting the catalyst-precursor obtained in (a) with Mg-alkyl or Mg-alkyl-halide or a mixture of both, optionally in presence of electron-donors (Lewis bases),
c) halogenating the catalyst-precursor obtained in (b) by contact of said activated support with halogenating agents,
d) titanating the catalyst-precursor obtained in (c) with Ti-tetrahalide in the presence of electron-donors (Lewis bases),
e) recovering the solid catalyst-component from the reaction products of step (d).

2. Procedure according to claim 1, wherein in step (a) microspheroidal silica is used with a particle size of 15 to 150 micron, a surface area of 100 to 500 m²/g, a pore volume of 1,2 to 3,0 ml/g.

3. Procedure according to claim 1 or 2, wherein in step (a) Mg-dihalide or Mg-alkyl-halide is dissolved in ethylacetate, optionally in presence of Ti-tetrabutoxide or Ti-halide-alkoxide.

4. Procedure according to any of claims 1 to 3, wherein the halogenating agents are chosen from the group consisting of chlorinated hydrocarbons.

5. Procedure according to any of claims 1 to 4, wherein a mixture of chloroform and butylchloride is used as halogenating agent.

6. Procedure according to any of claims 1 to 5, wherein in step (b) the catalyst precursor is optionally contacted with di-iso-butyl-phthalate.

7. Procedure according to any of claims 1 to 6, wherein the solid catalyst-component obtained in step (c) is submitted to one or more treatments with Ti-tetrachloride, concentrated or diluted in aliphatic of aromatic hydrocarbons, in presence of a Lewis base.

8. A solid catalyst component for the polymerization of olefins, obtained by the reaction steps:
a) contacting a non silylated silica support with a solution of Mg-halide or Mg-alkyl-halide or a mixture of both, optionally in the presence of and Ti-alkoxyde or Ti-halogen-alkoxyde or a mixture of both,
b) contacting the catalyst-precursor obtained in (a) with Mg-alkyl or Mg-alkyl-halide or a mixture of both, optionally in presence of electron-donors (Lewis bases),
c) halogenating the catalyst-precursor obtained in (b) by contact of said activated support with halogenating agents,
d) titanating the catalyst-precursor obtained in (c) with Ti-tetrahalide in the presence of electron-donors (Lewis bases),
e) recovering the solid catalyst-component from the reaction products of step (d).

9. A solid catalyst-component according to claim 8, containing 27 - 87.5 % w. silica, 2.0 - 10.0 % w. Mg, 9 - 47 % w. Cl, 1.0 - 6.0 % w. Ti and 0.5 - 10.0 % w. of a Lewis base.

10. Catalyst for the polymerization of olefins, which is based on a solid catalyst component as claimed in any of claims of 1 to 9, an Al-tri-alkyl or an Al-halogen-alkyl and a Lewis base, preferably selected from alkoxysilane derivatives.

11. Catalyst component or catalyst according to any of claims 1 to 10 for the polymerization of olefins, used for polymerizing in the temperature range from 20°C to 150°C, but specific for operating in the temperature range from 70°C to 120°C.

12. Use of a solid catalyst component or catalyst as claimed in any of claims 1 to 11 for the polymerization or copolymerization of olefins.

13. Process for the preparation of polyolefins by homopolymerization or copolymerization of olefins, wherein a solid catalyst component or catalyst as claimed in any of claims 1 to 11 is used.

## Patentansprüche

1. Verfahren zur Herstellung einer bei der Polymerisation von Olefinen aktiven festen Katalysatorkomponente, bei dem man:
a) einen nicht silylierten Siliciumdioxidträger mit einer Lösung von Magnesiumhalogenid oder Alkylmagnesiumhalogenid oder einem Gemisch davon gegebenenfalls in Gegenwart von Titanalkoholat oder Titanhalogenidalkoholat oder einem Gemisch davon in Berührung bringt,
b) den in (a) erhaltenen Katalysatorvorläufer mit Magnesiumalkyl oder Alkylmagnesiumhalogenid oder einem Gemisch davon gegebenenfalls in Gegenwart von Elektronendonatoren (Lewis-Basen) in Berührung bringt,
c) den in (b) erhaltenen Katalysatorvorläufer durch Inberührungbringen des aktivierten Trägers mit Halogenierungsmitteln halogeniert,
d) den in (c) erhaltenen Katalysatorvorläufer mit Titantetrahalogenid in Gegenwart von Elektronendonatoren (Lewis-Basen) titaniert und
e) die feste Katalysatorkomponente aus den Reaktionsprodukten des Schritts (d) isoliert.

2. Verfahren nach Anspruch 1, bei dem man in Schritt (a) mikrokugelförmiges Siliciumdioxid mit einer Korngröße von 15 bis 150 Mikron, einer Oberfläche von 100 bis 500 m²/g und einem Porenvolumen von 1,2 bis 3,0 ml/g einsetzt.

3. Verfahren nach Anspruch 1 oder 2, bei dem man in Schritt (a) Magnesiumdihalogenid oder Alkylmagnesiumhalogenid gegebenenfalls in Gegenwart von Titantetrabutylat oder Titanhalogenidalkoholat in Essigsäureethylester löst.

4. Verfahren nach einem der Ansprüche 1 bis 3, bei dem man die Halogenierungsmittel aus der Gruppe der Chlorkohlenwasserstoffe auswählt.

5. Verfahren nach einem der Ansprüche 1 bis 4, bei dem man als Halogenierungsmittel eine Mischung aus Chloroform und Butylchlorid einsetzt.

6. Verfahren nach einem der Ansprüche 1 bis 5, bei dem man in Schritt (b) den Katalysatorvorläufer gegebenenfalls mit Diisobutylphthalat in Berührung bringt.

7. Verfahren nach einem der Ansprüche 1 bis 6, bei dem man die in Schritt (c) erhaltene feste Katalysatorkomponente ein- oder mehrmals in Gegenwart einer Lewis-Base mit konzentriertem oder in aliphatischen oder aromatischen Kohlenwasserstoffen verdünntem Titantetrachlorid behandelt.

8. Feste Katalysatorkomponente für die Polymerisation von Olefinen, die erhältlich ist, indem man:
a) einen nicht silylierten Siliciumdioxidträger mit einer Lösung von Magnesiumhalogenid oder Alkylmagnesiumhalogenid oder einem Gemisch davon gegebenenfalls in Gegenwart von Titanalkoholat oder Titanhalogenidalkoholat oder einem Gemisch davon in Berührung bringt,
b) den in (a) erhaltenen Katalysatorvorläufer mit Magnesiumalkyl oder Alkylmagnesiumhalogenid oder einem Gemisch davon gegebenenfalls in Gegenwart von Elektronendonatoren (Lewis-Basen) in Berührung bringt,
c) den in (b) erhaltenen Katalysatorvorläufer durch Inberührungbringen des aktivierten Trägers mit Halogenierungsmitteln halogeniert,
d) den in (c) erhaltenen Katalysatorvorläufer mit Titantetrahalogenid in Gegenwart von Elektronendonatoren (Lewis-Basen) titaniert und
e) die feste Katalysatorkomponente aus den Reaktionsprodukten des Schritts (d) isoliert.

9. Feste Katalysatorkomponente nach Anspruch 8, enthaltend 27-87.5 Gew.-% Siliciumdioxid, 2,0 - 10,0 Gew.-% Mg, 9 - 47 Gew.-% Cl, 1,0 - 6,0 Gew.-% Ti und 0,5 - 10 Gew.-% einer Lewis-Base.

10. Katalysator für die Polymerisation von Olefinen, basierend auf einer festen Katalysatorkomponente nach einem der Ansprüche 1 bis 9, einem Aluminiumtrialkyl oder einem Alkylaluminiumhalogenid und einer Lewis-Base, vorzugsweise ausgewählt unter Alkoxysilan-Derivaten.

11. Katalysatorkomponente bzw. Katalysator nach einem der Ansprüche 1 bis 10 für die Polymerisation von Olefinen, der zur Polymerisation im Temperaturbereich von 20°C bis 150°C, aber speziell im Temperaturbereich von 70°C bis 120°C eingesetzt wird.

12. Verwendung einer festen Katalysatorkomponente bzw. eines festen Katalysators nach einem der Ansprüche 1 bis 11 zur Polymerisation oder Copolymerisation von Olefinen.

13. Verfahren zur Herstellung von Polyolefinen durch Homo- oder Copolymerisation von Olefinen, bei dem man eine feste Katalysatorkomponente bzw. einen festen Katalysator nach einem der Ansprüche 1 bis 11 einsetzt.

## Revendications

1. Procédé de préparation d'un composant solide de catalyseur qui est actif pour la polymérisation d'oléfines, comprenant les étapes consistant à :
a) amener un support de silice non silylée au contact d'une solution d'halogénure de Mg ou d'halogénure de Mg-alkyle ou d'un mélange des deux, éventuellement en présence d'alcoxyde de Ti ou d'halogénoalcoxyde de Ti ou d'un mélange des deux,
b) amener le précurseur de catalyseur obtenu en (a) au contact de Mg-alkyle ou d'un halogénure de Mg-alkyle ou d'un mélange des deux, éventuellement en présence de donneurs d'électrons (bases de Lewis),
c) halogéner le précurseur de catalyseur obtenu en (b) en amenant ledit support activé au contact d'agents d'halogénation,
d) titaner le précurseur de catalyseur obtenu en (c) avec un tétrahalogénure de Ti en présence de donneurs d'électrons (bases de Lewis),
e) récupérer le composant solide de catalyseur à partir des produits de réaction de l'étape (d).

2. Procédé selon la revendication 1, dans lequel on utilise, dans l'étape (a), de la silice microsphérique ayant une dimension de particules de 15 à 150 microns, une surface spécifique de 100 à 500 m²/g et un volume de pores de 1,2 à 3,0 ml/g.

3. Procédé selon la revendication 1 ou 2, dans lequel, pendant l'étape (a), on dissout un dihalogénure de Mg ou un halogénure de Mg-alkyle dans de l'acétate d'éthyle, éventuellement en présence de tétrabutylate de Ti ou d'halogénoalcoxyde de Ti.

4. Procédé selon l'une quelconque des revendications 1 à 3, dans lequel on choisit les agents d'halogénation dans l'ensemble constitué par des hydrocarbures chlorés.

5. Procédé selon l'une quelconque des revendications 1 à 4, dans lequel on utilise un mélange de chloroforme et de chlorure de butyle comme agent d'halogénation.

6. Procédé selon l'une quelconque des revendications 1 à 5, dans lequel, pendant l'étape (b), on amène éventuellement le précurseur de catalyseur au contact de phtalate de diisobutyle.

7. Procédé selon l'une quelconque des revendications 1 à 6, dans lequel on soumet le composant solide de catalyseur obtenu dans l'étape (c) à un ou plusieurs traitements avec du tétrachlorure de Ti, concentré ou dilué dans des hydrocarbures aliphatiques ou aromatiques, en présence d'une base de Lewis.

8. Composant solide de catalyseur pour la polymérisation d'oléfines, obtenu au moyen des étapes de réaction consistant à :
a) amener un support de silice non silylée au contact d'une solution d'halogénure de Mg ou d'halogénure de Mg-alkyle ou d'un mélange des deux, éventuellement en présence d'alcoxyde de Ti ou d'halogénoalcoxyde de Ti ou d'un mélange des deux,
b) amener le précurseur de catalyseur obtenu en (a) au contact de Mg-alkyle ou d'un halogénure de Mg-alkyle ou d'un mélange des deux, éventuellement en présence de donneurs d'électrons (bases de Lewis),
c) halogéner le précurseur de catalyseur obtenu en (b) en amenant ledit support activé au contact d'agents d'halogénation,
d) titaner le précurseur de catalyseur obtenu en (c) avec un tétrahalogénure de Ti en présence de donneurs d'électrons (bases de Lewis),
e) récupérer le composant solide de catalyseur à partir des produits de réaction de l'étape (d).

9. Composant solide de catalyseur selon la revendication 8, contenant de 27 à 87,5 % en poids de silice, de 2,0 à 10,0 % en poids de Mg, de 9 à 47 % en poids de CI, de 1,0 à 6,0 % en poids de Ti et de 0,5 à 10,0 % en poids d'une base de Lewis.

10. Catalyseur pour la polymérisation d'oléfines, qui est à base d'un composant solide de catalyseur selon l'une quelconque des revendications 1 à 9, d'un Al-trialkyle ou d'un Al-halogéno-alkyle et d'une base de Lewis choisie, de préférence, parmi des dérivés d'alcoxysilanes.

11. Composant de catalyseur ou catalyseur selon l'une quelconque des revendications 1 à 10 pour la polymérisation d'oléfines, utilisé pour une polymérisation dans la plage de températures de 20°C à 150°C, mais spécifique à une mise en oeuvre dans la plage de températures de 70°C à 120°C.

12. Utilisation d'un composant solide de catalyseur ou d'un catalyseur selon l'une quelconque des revendications 1 à 11 pour la polymérisation ou la copolymérisation d'oléfines.

13. Procédé de préparation de polyoléfines par homopolymérisation ou par copolymérisation d'oléfines, dans lequel on utilise un composant solide de catalyseur ou un catalyseur selon l'une quelconque des revendications 1 à 11.
